Europäisches Patentamt

European Patent Office

Office européen des brevets

(11) Numéro de publication : **0 287 429 B1**

(12) **FASCICULE DE BREVET EUROPEEN**

(45) Date de publication du fascicule du brevet :
**02.01.92 Bulletin 92/01**

(51) Int. Cl.⁵ : **F16L 13/02, F16L 58/18**

(21) Numéro de dépôt : **88400813.7**

(22) Date de dépôt : **05.04.88**

(54) **Procédé de fabrication de tubes métalliques assemblés par leurs extrémités.**

(30) Priorité : **16.04.87 FR 8705446**

(43) Date de publication de la demande :
**19.10.88 Bulletin 88/42**

(45) Mention de la délivrance du brevet :
**02.01.92 Bulletin 92/01**

(84) Etats contractants désignés :
**BE DE FR GB IT NL SE**

(56) Documents cités :
**EP-A- 0 189 934**
**DD-A- 99 425**
**DE-A- 3 049 431**
**FR-A- 2 434 330**
**FR-A- 2 438 788**

(73) Titulaire : **ATOCHEM**
**4 & 8, Cours Michelet La Défense 10**
**F-92800 Puteaux (FR)**

(72) Inventeur : **Lescaut, Pierre Louis**
**La Vieille Sente du Mascrier**
**F-27300 Bernay (FR)**

(74) Mandataire : **Rochet, Michel et al**
**ATOCHEM Département Propriété Industrielle**
**F-92091 Paris la Défense Cédex 42 (FR)**

EP 0 287 429 B1

Jouve, 18, rue Saint-Denis, 75001 PARIS

## Description

La présente invention concerne un procédé de fabrication de tubes métalliques de grand diamètre assemblés par leurs extrémités (par exemple des tubes pour oléoducs ou carboducs d'un diamètre égal ou supérieur à 200 mm) dont la paroi interne est munie d'un revêtement thermosensible.

Lesdits tubes sont actuellement réalisés en tronçons longs de 6 à 15 m et sont munis d'un revêtement intérieur anti-corrosion ou anti-abrasion selon les fluides transportés.

Par fluides il faut entendre de la façon la plus générale les liquides pétroliers, l'eau, les solutions et lessives chimiques, les suspensions dans l'eau de solides tels que les fines de houille ou bouillies diverses.

Les tubes adaptés au transport de ces fluides reçoivent habituellement des protections intérieures qui sont, suivant les cas et les degrés d'évolution de la technique, du ciment centrifugé, des bitumes, des revêtements à base de résines époxy catalysées durcissant à froid, des revêtements à base de résines thermoplastiques, des revêtements à base de résines thermodurcissables, des revêtements à base d'élastomères.

Avec tous ces revêtements, du fait, suivant le cas, de leur tendance à la fissuration, de leur fusibilité ou de leur tendance à la pyrolyse à la température de mise en oeuvre des tubes pour assemblage, on est obligé de réserver aux extrémités desdits tubes une partie non revêtue dont la dimension dans le sens des génératrices des tubes peut varier entre la moitié et le double du diamètre en fonction du diamètre, de l'épaisseur de paroi des tubes, de la nature du revêtement.

Ces parties non revêtues sont donc le siège d'une corrosion ou abrasion intense parce que concentrée, imposant le remplacement onéreux des tubes au bout de périodes de temps plus ou moins longues.

D'autres solutions font appel à des brides métalliques munies de lèvres en matière élastomère venant prendre appui sur le revêtement intérieur qui est réalisé dans ce cas sans réserve jusqu'aux extrémités des tronçons de tubes. L'inconvénient de telles solutions est que les lèvres en matière élastomère ne résistent pas aux pressions élevées et doivent être réservées aux basses pressions seulement (inférieures à 3500 kPa).

Une autre solution consiste à utiliser des bagues de raccordement en acier inoxydable. C'est une solution qui se révèle toujours onéreuse et qui peut même conduire à l'emploi de techniques complexes dans le cas où le revêtement intérieur des tubes est épais, lorsqu'on recherche par exemple une résistance particulièrement élevée à l'abrasion. Il faut alors prévoir un épaulement tenant compte de l'épaisseur du revêtement et l'obtention d'une bonne étanchéité est dans ce cas délicate. En outre, quelle que soit la composition du revêtement thermosensible dont est munie la paroi interne des tubes, il existe dans tous les cas une différence de composition des revêtements adjacents et par suite une différence de leur résistance à l'abrasion qui entraîne une différence d'usure des surfaces desdits revêtement et à long terme une variation du diamère intérieur des tubes au voisinage du raccordement.

Dans la demande de brevet FR 2.434.330 on a décrit un procédé de fabrication de conduites de grande longueur à partir de tronçons métalliques dont la face interne est revêtue d'un matériau plastique à l'exclusion d'une partie située à chacune des extrémités desdits tronçons que l'on soude entre eux ; on place ensuite un enroulement en spirale, au niveau de la partie non revêtue de la soudure, formé du même matériau plastique de longueur égale à environ le double de la partie non revêtue de chacune des extrémités des tronçons, puis chauffé faiblement la partie externe métallique pour assurer la fusion superficielle de l'enroulement et son adhérence à la partie métallique interne du tube.

Le procédé selon l'invention est défini à la revendication 1.

Par "partie encore non revêtue après assemblage" on entend, dans la présente description, la partie de la paroi interne des tubes assemblés située au voisinage de l'assemblage et encore non revêtue après assemblage.

Le revêtement thermosensible dont est munie la partie encore non revêtue après assemblage peut être à base de toute matière thermosensible fusible pouvant être préparée sous forme de bande. Ladite matière peut être choisie notamment parmi les résines thermoplastiques, les résines thermodurcissables munies d'au moins un agent de réticulation agissant à chaud, les élastomères.

Le revêtement thermosensible dont est munie la paroi interne des tubes avant assemblage peut être à base de toute matière habituellement utilisée telle que du ciment hydrofugé, des bitumes, des résines époxy catalysées durcissant à froid, des résines thermoplastiques, des résines thermodurcissables, des élastomères.

Comme résines thermoplastiques on peut citer les polyamides, les résines fluorées, les polyéthylènes, les polymères du chlorure de vinyle.

Comme résines thermodurcissables on peut citer les polyuréthannes.

Le revêtement thermosensible dont est munie la partie encore non revêtue après assemblage peut être de composition différente de celle du revêtement dont est munie la paroi interne des tubes avant assemblage mais il est de préférence de composition identique dans tous les cas où le revêtement dont est munie la paroi interne des tubes avant assemblage est à base de matière thermosensible fusible.

L'épaisseur de chaque revêtement thermosensible est généralement de 0,5 à 6 mm et de préférence de 2 à 5 mm.

L'obtention de tubes, dont la paroi interne est munie d'un revêtement thermosensible et présente une partie non revêtue à l'une au moins des extrémités, pour la préparation des tubes assemblés mis en oeuvre selon le procédé de l'invention peut être réalisée de toute manière connue en soi et habituellement en atelier en déposant ledit revêtement sur la paroi interne du tube, et ceci sur une longueur plus faible que la longueur totale du tube, avec, à l'une au moins des extrémités, une partie non revêtue, ou réserve, dont la dimension dans le sens des génératrices du tube est généralement comprise entre le dixième et le double du diamètre. Ladite réserve a pour rôle de préserver le revêtement thermosensible de la fusion ou de la pyrolyse causée par l'élévation de température que provoquerait l'opération d'assemblage des tubes réalisée sur chantier.

L'assemblage des tubes par leurs extrémités, pour la préparation des tubes assemblés mis en oeuvre selon le procédé de l'invention, peut être réalisé par toute technique connue en soi telle que, par exemple, le soudage ou le tulipage et plus généralement le soudage, bout à bout, à l'aide d'un cordon d'apport.

Dans le cas d'un assemblage par soudage bout à bout la paroi de chaque tube comporte avant assemblage une partie non revêtue à chaque extrémité du tube. Après assemblage l'ensemble des deux parties non revêtues constitue la partie encore non revêtue après assemblage.

Dans le cas d'un assemblage par tulipage seule la paroi interne des extrémités tulipées des tubes comporte avant assemblage une partie non revêtue correspondant à la partie tulipée. Après assemblage la portion de la partie tulipée de la paroi interne de l'extrémité femelle de l'un des tubes qui n'est pas en contact avec la paroi externe de l'extrémité mâle correspondante de l'autre tube constitue la partie encore non revêtue après assemblage.

La bande de matière est de volume sensiblement égal à celui de la cavité formée par l'assemblage et située au droit de la partie encore non revêtue après assemblage et de largeur allant de 0,60 à 0,90 fois la largeur de ladite cavité, mesurée dans le sens des génératrices des tubes, et d'épaisseur allant de 1,10 à 1,65 fois la profondeur de ladite cavité, mesurée dans le sens radial.

Par volume "sensiblement égal" on doit comprendre que le volume de la bande de matière ne diffère pas de plus de 3% de celui de la cavité formée par l'assemblage et située au droit de la partie encore non revêtue après assemblage et lui est de préférence égal.

La bande de matière, après amincissement, élargissement et soudage au revêtement adjacent dans les conditions du procédé, constitue le revêtement thermosensible dont est munie la partie encore non revêtue après assemblage.

Dans le cas où le revêtement thermosensible, dont on désire munir la partie encore non revêtue après assemblage, est de composition différente de celle du revêtement thermosensible dont est munie la paroi interne des tubes avant assemblage, on dépose avantageusement une matière de collage, telle que, par exemple, une résine époxy, d'une part sur la face de la bande de matière à appliquer sur la partie encore non revêtue après assemblage et d'autre part sur les faces latérales de ladite bande de matière.

La bande de matière peut être réalisée par coupe transversale d'une bague obtenue par tronçonnage d'un tube de ladite matière, de diamètre extérieur sensiblement égal au diamètre intérieur des tubes non revêtus. Le tube de ladite matière peut être préparé, par exemple, par moulage par rotation dans le cas d'une matière à base de résine thermoplastique ou par extrusion dans le cas d'une matière à base de résine thermoplastique ou à base de résine thermodurcissable.

Par diamètre extérieur "sensiblement égal" on doit comprendre que le diamètre extérieur du tube de ladite matière ne diffère pas de plus de 1% du diamètre intérieur des tubes non revêtus et lui est de préférence égal.

Par "tubes non revêtus" on entend, dans la présente description, les tubes métalliques dont la paroi interne n'est pas munie d'un revêtement.

Des moyens avantageux pour appliquer, par l'une de ses faces, la bande de matière sur la partie encore non revêtue après assemblage et pour exercer une pression sur l'autre face de ladite bande de matière consistent en des lames de serrage, généralement métalliques, mues par des vérins montés sur un chariot automoteur pouvant se déplacer, de préférence dans les deux sens de marche, à l'intérieur des tubes, parallèlement à leur axe. La face externe des lames de serrage est de préférence polie et avantageusement revêtue d'un agent antiadhérent tel que, par exemple, des résines siliconées, afin qu'après fusion de la bande de matière il n'y ait pas d'adhérence de ladite matière à ladite face externe. Les vérins peuvent fonctionner électriquement ou par pression de fluide. Ledit chariot peut être commandé à distance par l'intermédiaire de câbles électriques et de tubulures pour fluides de vérins ou peut être rendu autonome à l'aide d'une batterie d'accumulateurs, d'un appareil à pression de fluide et d'un dispositif de programmation disposés sur le chariot.

Comme moyens utilisables pour amener la bande de matière à l'état de fusion on peut citer tout moyen permettant d'amener de la chaleur par l'extérieur des tubes tel que, par exemple, un appareil à induction, un appareil à infrarouge ou un collier chauffant.

On donne ci-après, en référence aux planches 1 à 4 de dessin ci-jointes, une description d'une forme de réalisation de l'invention.

La figure 1 est une vue en coupe axiale de la moitié des sections, située au-dessus de l'axe, de deux tubes assemblés tels qu'ils se présentent avant le début de la réalisation de la finition du revêtement. Ainsi le haut de la figure représente-t-il l'extérieur des tubes et le bas de la figure l'intérieur des tubes.

Les figures 2, 3 et 4 sont des vues en perspective montrant les stades successifs de la préparation de la bande de matière.

La figure 5 est une vue en coupe axiale de la moitié des sections, située au-dessus de l'axe, des deux tubes assemblés représentés sur la figure 1, au cours de la réalisation de la finition du revêtement. Ainsi le haut de la figure représente-t-il l'extérieur des tubes et le bas de la figure l'intérieur des tubes.

La figure 6 est une vue en coupe axiale de la moitié des sections, située au-dessus de l'axe, des deux tubes assemblés objet de l'invention. Ainsi le haut de la figure représente-t-il l'extérieur des tubes et le bas de la figure l'intérieur des tubes.

La figure 7 est une vue en coupe axiale des tubes et en élévation d'un chariot automoteur en position d'arrêt à l'extrémité libre de l'un des tubes assemblés représentés sur la figure 1.

La figure 8 est une vue en coupe selon la ligne VIII-VIII de la figure 7.

La figure 9 est une vue en coupe axiale des tubes et en élévation d'un chariot automoteur en position d'arrêt à l'intérieur des tubes assemblés représentés sur la figure 1, à l'endroit adéquat pour réaliser la finition du revêtement, immédiatement après réalisation de ladite finition.

La figure 10 est une vue en coupe selon la ligne X-X de la figure 9.

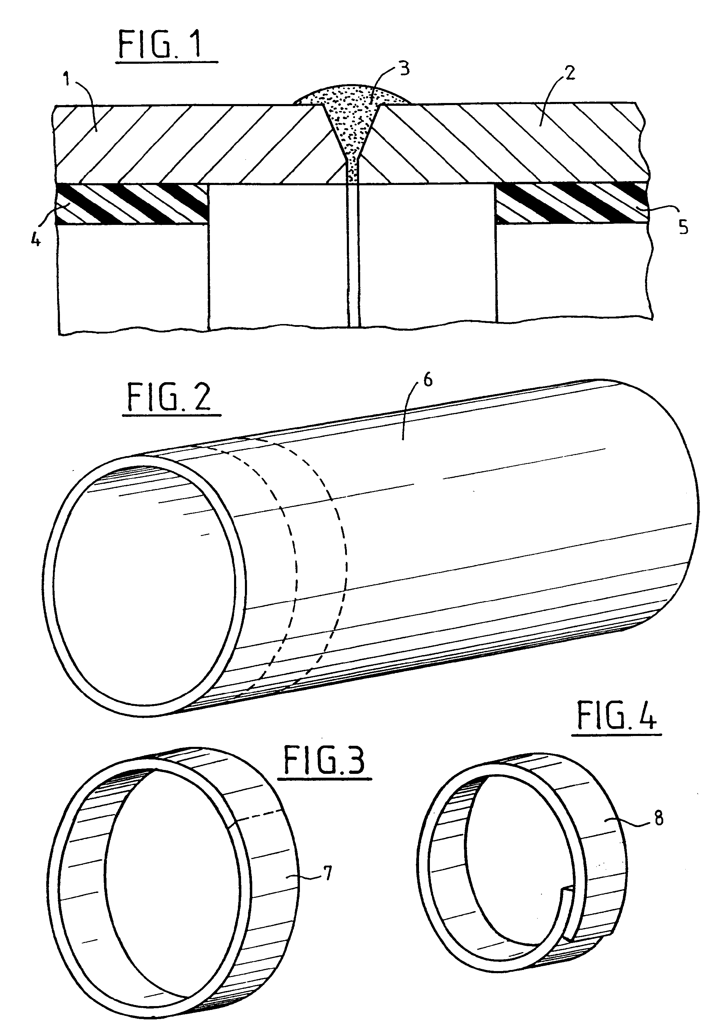

Sur les figures 1, 5, 6, 7 et 9 on voit les tubes 1 et 2 assemblés par soudage bout à bout au moyen d'un cordon d'apport 3. En 4 et 5 on voit le revêtement thermosensible dont est munie, avant assemblage, la paroi interne respectivement des tubes 1 et 2.

Sur la figure 2 est représenté le tube 6 à base de matière thermosensible fusible.

Sur la figure 3 est représentée la bague 7 obtenue par tronçonnage du tube 6 selon les deux lignes en tirets de la figure 2.

Sur la figure 4 est représentée la bande de matière 8 obtenue par coupe transversale de la bague 7 selon la ligne en tirets de la figure 3 et formage à chaud sur un mandrin.

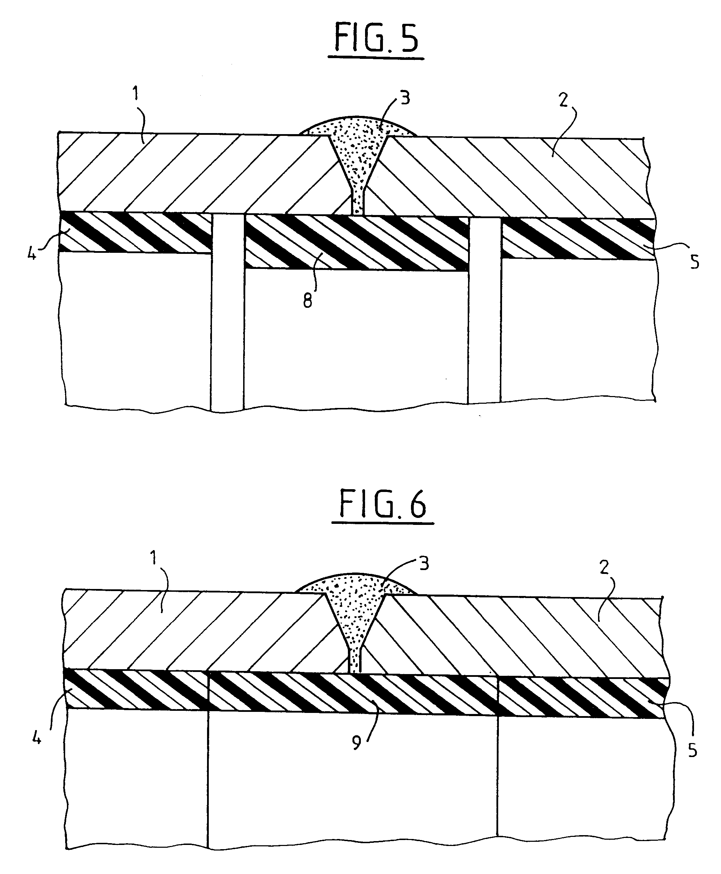

Sur la figure 5 on voit la bande de matière 8 au moment où elle entre en contact, par sa face externe, avec la partie encore non revêtue après assemblage.

Sur les figures 6, 9 et 10 on voit en 9 le revêtement thermosensible dont est munie la partie encore non revêtue après assemblage.

Le chariot automoteur 10 placé à l'entrée du tube 1 comprend un groupe moteur 11 monté sur une poutre porteuse 12, de section droite carrée, orientée selon l'axe des tubes 1 et 2 et un dispositif 13 pour appliquer, par sa face externe, la bande de matière 8 sur la partie encore non revêtue après assemblage et pour exercer une pression sur la face interne de ladite bande de matière 8. Le chariot 10 est muni de deux roues telles que 14 entraînées par le groupe moteur 11 et de deux roues telles que 15 montées sur un essieu (non représenté) supportant l'élément de châssis 16 fixé sur la poutre porteuse 12.

Le dispositif 13 comprend quatre vérins tels que 17 montés sur la poutre porteuse 12 et disposés de manière régulière autour de son axe, chaque vérin tel que 17 étant monté sur l'une des faces latérales de ladite poutre 12. Chaque vérin tel que 17 est muni à son extrémité d'une lame métallique de serrage telle que 18, en forme d'arc de cercle dont le rayon de courbure de la face externe est égal au rayon de courbure intérieur des tubes revêtus 1 et 2 et dont la longueur est égale au quart de la circonférence intérieure des tubes revêtus 1 et 2. Les bords extrêmes des lames de serrage telles que 18 sont usinés en biseau de manière à ce que les bords extrêmes de deux lames consécutives se recouvrent étroitement lorsque les lames de serrage telles que 18 sont dans une position d'ouverture, dite "position ouverte", telle que leur face externe forme une surface de révolution cylindrique continue de diamètre égal au diamètre intérieur des tubes revêtus 1 et 2. La largeur des lames de serrage telles que 18 est généralement comprise entre 2 et 4 fois la largeur de la partie encore non revêtue après assemblage, mesurée dans le sens des génératrices des tubes.

Par "tubes revêtus" on entend, dans la présente description, les tubes métalliques dont la paroi interne est munie d'un revêtement thermosensible.

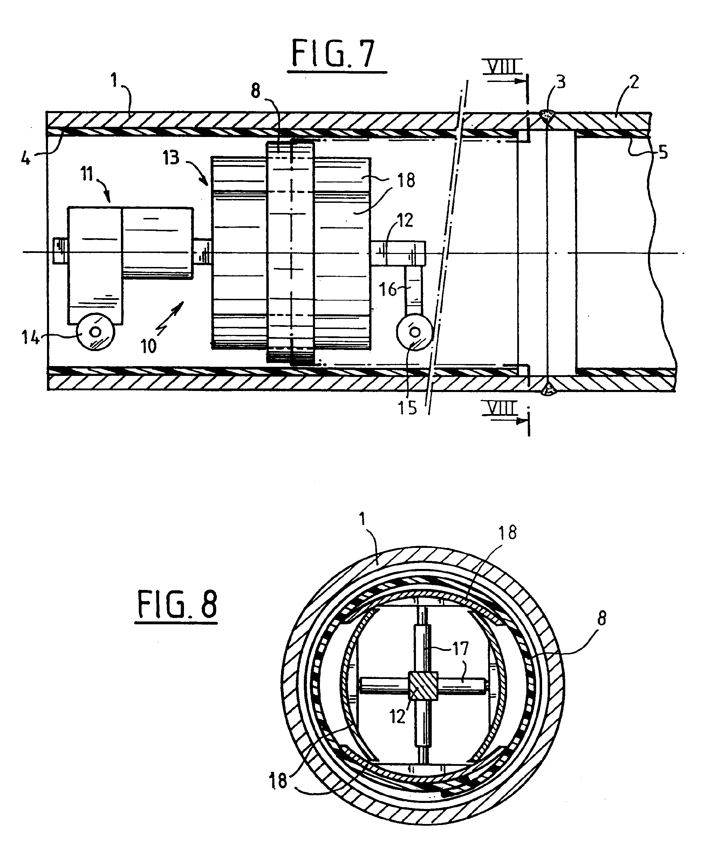

Sur les figures 7 et 8 les lames de serrage telles que 18 sont en position fermée. Le diamètre du mandrin, sur lequel est formé à chaud la bande de matière 8, est généralement de 5 à 20% et de préférence de 8 à 12% inférieur au diamètre du cercle passant par les bords extrêmes, les plus éloignés de l'axe de la poutre porteuse 12, des lames de serrage telles que 18 considérées en position fermée.

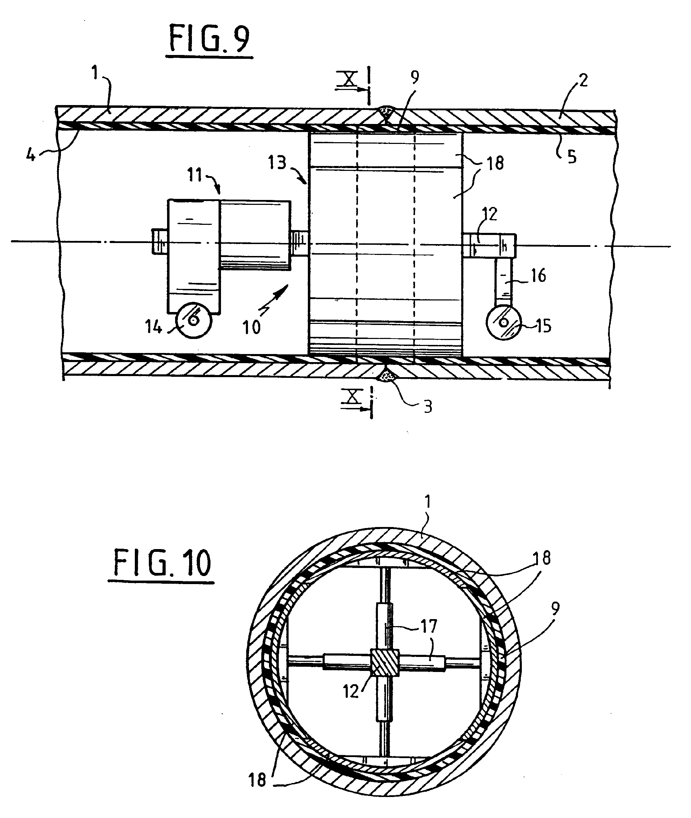

Sur les figures 9 et 10 les lames de serrage telles que 18 sont en position ouverte.

D'une manière plus générale le nombre de vérins peut varier de quatre à douze selon le diamètre du tube, la poutre porteuse ayant pour section droite un polygone régulier dont le nombre de côtés est égal au nombre de vérins, un vérin étant monté sur chacune des faces latérales de la poutre. Chaque vérin est muni à son extrémité d'une lame de serrage en forme d'arc de cercle dont le rayon de courbure le la face externe est égal au rayon de courbure intérieur des tubes revêtus et dont la longueur est égale au quotient de la circonférence intérieure des tubes revêtus par le nombre de lames de serrage.

Le chariot automoteur 10 comprend également des éléments (non représentés) rendant son fonctionnement autonome : batterie d'accumulateurs, appareil à pression de fluide et dispositif de programmation muni d'un système de repérage de la partie encore non revêtue après assemblage, par isotope radioactif ou palpeur mécanique, qui programme successivement l'arrêt du chariot à l'endroit adéquat, la réalisation de la finition du revêtement et le déplacement du chariot jusqu'à l'extrémité libre de l'un des tubes 1 et 2.

L'appareillage comprend également un appareil à induction (non représenté) disposé autour des tubes au droit de la partie encore non revêtue après assemblage.

En utilisant les tubes assemblés 1 et 2, la bande de matière 8 et l'appareillage décrit ci-dessus et représenté sur les figures 7 à 10 le déroulement du procédé est le suivant :

Les lames de serrage telles que 18 étant en position fermée, on dispose manuellement autour d'elles la bande de matière 8, entre des repères tracés sur elles. On dispose le chariot automoteur 10 à l'extrémité libre de l'un des tubes 1 et 2 assemblés. Après mise en marche du chariot automoteur 10 celui-ci vient se placer à l'endroit adéquat pour réaliser la finition du revêtement thermosensible. Sous l'action de la force exercée par chaque vérin tel que 17, mis en marche de manière automatique, sur la face interne de la lame de serrage telle que 18 correspondante, lesdites lames de serrage telles que 18 s'ouvrent et, ce faisant, viennent s'appuyer sur la totalité de la face interne de la bande de matière 8, amenant ainsi ladite bande de matière 8 à s'appliquer par la totalité de sa face externe sur la partie encore non revêtue après assemblage. La bande de matière 8 étant alors amenée à l'état de fusion par chauffage au moyen de l'appareil à induction, les lames de serrage telles que 18 atteignent la position ouverte tout en exerçant sur la face interne de la bande de matière 8 une pression suffisante pour l'amincir, l'élargir et la souder au revêtement adjacent. Le fonctionnement de l'appareil à induction est stoppé. La matière amenée à l'état de fusion est solidifiée par refroidissement naturel ou par refroidissement forcé, par exemple par jet d'air, puis les lames de serrage telles que 18 reprennent la position fermée et le chariot automoteur 10 gagne l'extrémité libre de l'un des tubes 1 et 2.

On donne ci-après un exemple de réalisation des tubes métalliques assemblés par leurs extrémités conformes à l'invention.

## EXEMPLE

L'appareillage utilisé est celui décrit ci-dessus et représenté sur les figures 7 à 10. Le diamètre du cercle passant par les bords extrêmes, les plus éloignés de l'axe de la poutre, des lames métalliques de serrage considérées en position fermée est de 312 mm. La face externe des lames de serrage est polie et revêtue de résine siliconée.

Un tube en acier de 12 m de longueur, 400 mm de diamètre extérieur et 4 mm d'épaisseur de paroi, reçoit sur sa paroi interne un dépôt de matière thermoplastique polyamide 11 d'une épaisseur de 4 mm avec, à chaque extrémité, une réserve dont la dimension dans le sens des génératrices du tube est de 60 mm.

Après assemblage de ce tube sur chantier, par soudage bout à bout, au moyen d'un cordon d'apport, avec un autre tube identique, on applique, au moyen de l'appareillage, une bande de matière thermoplastique polyamide 11, par sa face externe, sur la partie encore non revêtue après assemblage. Ladite bande de matière a été préparée comme décrit ci-dessus en référence aux figures 2 à 4, à partir d'un tube de ladite matière de diamètre extérieur de 392 mm, obtenu par moulage par rotation, le formage à chaud, réalisé après trempage dans de l'eau portée à une température de 95°C, ayant eu lieu sur un mandrin de diamètre de 280 mm. Ladite bande de matière a une largeur de 80 mm et une épaisseur de 6 mm. La pression relative exercée sur la face interne de la bande de matière est de 20 kPa.

Dès application de la pression on procède à une élévation de température de la partie métallique des tubes à l'aide de l'appareil de chauffage par induction et maintient le chauffage jusqu'à ce que la totalité de la partie métallique, comprise dans une zone de 100 mm de largeur de part et d'autre de la soudure, ait atteint la température de 200°C.

Dès que la température de 200°C est atteinte le chauffage est interrompu et il est procédé au refroidissement forcé de la partie métallique par circulation à sa surface d'un flux d'air obtenu au moyen d'un ventilateur.

Lorsque la température de la partie métallique s'abaisse à 100°C le refroidissement forcé est interrompu et la pression exercée sur la bande de matière est supprimée.

Après arrivée du chariot automoteur à l'extrémité libre de l'un des tubes on constate au voisinage de l'assemblage une continuité de la protection interne des tubes assemblés, le revêtement thermosensible dont est munie la partie encore non revêtue après assemblage présentant une liaison intime avec le revêtement adjacent.

La tenue à l'érosion de l'ensemble ainsi réalisé est éprouvée en faisant circuler à l'intérieur des tubes un fluide constitué de 80 parties en poids d'eau et de 20 parties en poids de houille formée de particules dont la taille est comprise entre 0,5 et 2 mm, à la vitesse de 3,5 m/s et à température comprise entre 15 et 20°C.

Après une durée de circulation de 15000 heures la perte d'épaisseur observée en tout point de chaque revêtement thermoplastique, dont sont munies la paroi interne des tubes avant assemblage et la partie encore non revêtue après assemblage, ne dépasse pas 0,2 mm.

## Revendications

1. Procédé de fabrication de tubes métalliques assemblés par leurs extrémités dont la paroi interne est revêtue d'un revêtement thermosensible, selon lequel on réalise la finition du revêtement thermosensible de tubes assemblés par leurs extrémités, dont ladite paroi interne présent avant assemblage une partie non revêtue à l'une au moins de leurs extrémités, en appliquant, par l'une de ses faces, une bande de matière fusible sur la partie encore non revêtue après assemblage, puis en amenant ladite bande de matière à l'état de fusion et en exerçant simultanément sur l'autre face de ladite bande de matière une pression suffisante pour l'amincir, l'élargir et la souder au revêtement adjacent caractérisé en ce que la bande de matière est de volume sensiblement égal à celui de la cavité formée par l'assemblage et située au droit de la partie encore non revêtue après assemblage et de largeur allant de 0,60 à 0,90 fois la largeur de ladite cavité, mesurée dans le sens des génératrices des tubes, et d'épaisseur allant de 1,10 à 1,65 fois la profondeur de ladite cavité, mesurée dans le sens radial et en ce que la pression relative exercée sur l'autre face de la bande de matière est comprise entre 10 et 100 kPa.

2. Procédé selon la revendication 1 caractérisé par le fait que, dans le cas où le revêtement thermosensible dont on désire munir la partie encore non revêtue après assemblage est de composition différente de celle du revêtement thermosensible dont est munie la paroi interne des tubes avant assemblage, on dépose une matière de collage d'une part sur la face de la bande de matière à appliquer sur la partie encore non revêtue après assemblage et d'autre part sur les faces latérales de ladite bande de matière.

3. Procédé selon l'une quelconque des revendications 1 et 2 caractérisé par le fait que la bande de matière est réalisée par coupe transversale d'une bague obtenue par tronçonnage d'un tube de ladite matière.

4. Procédé selon la revendication 3, caractérisé par le fait que le tube de ladite matière est de diamètre extérieur sensiblement égal au diamètre intérieur des tubes non revêtus.

5. Procédé selon l'une quelconque des revendications 1 à 4 caractérisé par le fait que les moyens pour appliquer, par l'une de ses faces, la bande de matière sur la partie encore non revêtue après assemblage et pour exercer une pression sur l'autre face de ladite bande de matière consistent en des lames de serrage mues par des vérins montés sur un chariot automoteur pouvant se déplacer à l'intérieur des tubes parallèlement à leur axe.

6. Procédé selon la revendication 5, caractérisé par le fait que le chariot est commandé à distance par l'intermédiaire de câbles électriques et de tubulures pour fluides de vérins.

7. Procédé selon la revendication 5, caractérisé par le fait que le chariot est rendu autonome à l'aide d'une batterie d'accumulateurs, d'un appareil à pression de fluide et d'un dispositif de programmation disposés sur le chariot.

8. Procédé selon l'une quelconque des revendications 5 à 7, caractérisé par le fait que les moyens pour amener la bande de matière à l'état de fusion sont constitués par tout moyen permettant d'amener de la chaleur par l'extérieur des tubes.

9. Procédé selon la revendication 8, caractérisé par selon la revendication 8, caractérisé par le fait que les moyens pour amener la bande de matière à l'état de fusion sont choisis dans le groupe formé par les appareils à induction, les appareils à infrarouge, les colliers chauffants.

10. Procédé selon la revendication 5, caractérisé par le fait que les lames de serrage sont en forme d'arc de cercle dont le rayon de courbure de la face externe est égal au rayon de courbure intérieur des tubes revêtus et dont la longueur est égale au quotient de la circonférence intérieure des tubes revêtus par le nombre de lames de serrage.

11. Procédé selon la revendication 10, caractérisé par le fait que les bords extrêmes des lames de serrage sont usinés en biseau de manière à ce que les bords extrêmes de deux lames de serrage consécutives se recouvrent étroitement lorsque les lames de serrage sont dans une position d'ouverture telle que leur face externe forme une surface de révolution cylindrique continue de diamètre égal au diamètre intérieur des tubes revêtus.

12. Procédé selon la revendication 5, caractérisé par le fait que la largeur des lames de serrage est comprise entre 2 et 4 fois la largeur de la partie encore non revêtue après assemblage, mesurée dans le sens des génératrices des tubes.

## Patentansprüche

1. Verfahren zum Herstellen von an ihren Enden verbundenen Metallröhren, deren Innenwand mit einer wärmeempfindlichen Auskleidung bedeckt ist, gemäß dem die Endbearbeitung der wärmeempfindlichen Auskleidung der an ihren Enden verbundenen Röhren, deren Innenwand vor dem Verbinden zumindest an einem ihrer Enden einen nicht ausgekleideten Bereich aufweist, durchgeführt wird durch Aufbringen einer Seite eines Streifens aus schmelzbarem Material auf den nach dem Verbinden nicht ausgekleideten Bereich und anschließendem Herbeiführen eines geschmolzenen Zustands des Streifens unter gleichzeitigem Ausüben eines Drucks auf die andere Seite des Streifens, der ausreicht, um ihn dünner zu machen, zu vergrößern und mit der angrenzenden Auskleidung zu verschweißen, dadurch gekennzeichnet, daß der Streifen ein Volumen im wesentlichen gleich dem des durch das Verbinden gebildeten und senkrecht zum nach dem Verbinden noch nicht ausgekleideten Bereich gelegenen Hohlraums aufweist sowie eine Breite, gemessen in Mantelrichtung der Röhren, von 0,6 bis 0,9 mal der Breite des genannten Hohlraums, und eine Dicke, gemessen in radialer Richtung, von 1,1 bis 1,65 mal der Tiefe des Hohlraums aufweist, und daß der relative, auf die andere Seite des Streifens ausgeübte Druck zwischen 10 und 100 kPa beträgt.

2. Verfahren nach Anspruch 1, dadurch gekennzeichnet, daß, falls die wärmeempfindliche Auskleidung, mit der man den nach dem Verbinden noch nicht ausgekleideten Bereich versehen will, eine andere Zusammensetzung aufweist als die der wärmeempfindlichen Auskleidung, mit der die Innenwand der Röhren vor dem Verbinden ausgekleidet ist, man Klebstoff einerseits auf die Seite des Streifens, die auf den nach dem Verbinden noch nicht ausgekleideten Bereich aufgebracht wird, und andererseits auf die Randflächen des Streifens aufbringt.

3. Verfahren nach einem der Ansprüche 1 oder 2, dadurch gekennzeichnet, daß der Streifen durch Zerschneiden eines Rings entsteht, der durch Stückelung eines Rohrs aus dem genannten Material erhalten wurde.

4. Verfahren nach Anspruch 3, dadurch gekennzeichnet, daß das Rohr aus dem genannten Material einen Außendurchmesser hat, der im wesentlichen gleich dem Innendurchmesser der nicht ausgekleideten Röhren ist.

5. Verfahren nach einem der Ansprüche 1 bis 4, dadurch gekennzeichnet, daß die Mittel zum Aufbringen einer Seite des Streifens auf den nach dem Verbinden noch nicht ausgekleideten Bereich und zum Ausüben eines Drucks auf die andere Seite des Streifens aus Spannbacken auf Zylindern bestehen, die auf einen Motorkarren montiert sind, der sich im Inneren der Röhren parallel zu ihrer Achse bewegen kann.

6. Verfahren nach Anspruch 5, dadurch gekennzeichnet, daß der Karren mittels elektrischer Leitungen und Rohren für Hydraulikfluide ferngesteuert ist.

7. Verfahren nach Anspruch 5, dadurch gekennzeichnet, daß der Karren mit Hilfe einer Akkumulatorenbatterie, einem Fluiddruckerzeuger und einer auf dem Karren angeordneten Programmsteuerung autonom und netzunabhängig ist.

8. Verfahren nach einem der Ansprüche 5 bis 7, dadurch gekennzeichnet, daß die Mittel zum Herbeiführen des geschmolzenen Zustands des Streifens durch alle Mittel gebildet sind, die es erlauben, Hitze von außen durch die Röhren zu führen.

9. Verfahren nach Anspruch 8, dadurch gekennzeichnet, daß die Mittel zum Herbeiführen des geschmolzenen Zustands des Streifens gewählt werden aus der Gruppe der Induktionsgeräte, der Infrarotgeräte und der Heizbandgeräte.

10. Verfahren nach Anspruch 5, dadurch gekennzeichnet, daß die Spannbacken Kreisbogenform aufweisen, wobei der Krümmungsradius ihrer äußeren Fläche gleich dem inneren Krümmungsradius der ausgekleideten Röhren und ihre Länge gleich dem Quotient des inneren Umfangs der ausgekleideten Röhren, geteilt durch die Anzahl der Spannbacken, ist.

11. Verfahren nach Anspruch 10, dadurch gekennzeichnet, daß die äußersten Ränder der Spannbacken mit Schneidwerkzeugen so bearbeitet sind, daß die äußersten Ränder zweier aufeinanderfolgender Spannbacken sich genau überdecken, wenn die Spannbacken in einer Offenstellung sind, in der ihre äußere Fläche eine durchgehende Zylinderfläche mit einem dem Innendurchmesser der ausgekleideten Röhre entsprechenden Durchmesser bildet.

12. Verfahren nach Anspruch 5, dadurch gekennzeichnet, daß die Breite der Spannbacken, gemessen in Mantelrichtung der Röhren, zwischen 2 und 4 mal der Breite des nach dem Verbinden noch nicht ausgekleideten Bereichs beträgt.

## Claims

1. Process for producing metal pipes joined at their ends, the inner wall of which is equipped with a heat-sensitive covering, according to which the finishing of the heat-sensitive covering of pipes joined at their ends, the said inner wall of which has, before joining, an uncovered part at at least one of the pipe ends, is executed by applying a strip of fusible material, via one of its faces, to the part still uncovered after joining, then bringing the said strip of material to the fused state and simultaneously exerting on the other face of the said strip of material sufficient pressure for thinning it, widening it and welding it to the adjacent covering, characterised in that the strip of material is of a volume substantially equal to that of the cavity formed by the junction and arranged in line with the part still uncovered after joining, and of a width ranging from 0.60 to 0.90 times the width of the said cavity, as measured in the direction of the generatrices of the pipes, and of a thickness ranging from 1.10 to 1.65 times the depth of the said cavity, as measured in the radial direction, and in that the relative pressure exerted on the other face of the strip of material is between 10 and 100 kPa.

2. Process according to Claim 1, characterised in that, where the heat-sensitive covering, with which the part still uncovered after joining is to be equipped, is of a composition different from that of the heat-sensitive covering with which the inner wall of the pipes is equipped before joining, an adhesive bonding material is deposited, on the one hand, onto the face of the strip of material to be applied to the part still uncovered after joining, and on the other hand, to the lateral faces of the said strip of material.

3. Process according to any one of Claims 1 and 2, characterised in that the strip of material is produced as a result of the transverse cutting of a ring obtained by crosscutting a tube of the said material.

4. Process according to Claim 3, characterised in that the tube of the said material is of an outside diameter substantially equal to the inside diameter of the uncovered pipes.

5. Process according to any one of Claims 1 to 4, characterised in that the means for applying the strip of material, via one of its faces, to the part still uncovered after joining and for exerting pressure on the other face of the said strip of material consist of clamping blades actuated by jacks mounted on a self-propelled carriage movable inside the pipes parallel to their axis.

6. Process according to Claim 5, characterised in that the carriage is remote-controlled by means of electrical cables and fluid conduits of jacks.

7. Process according to Claim 5, characterised in that the carriage is made independent by means of an accumulator battery, a fluid-pressure appliance and a programming device which are arranged on the carriage.

8. Process according to any one of Claims 5 to 7, characterised in that the means for bringing the strip of material to the fused state consist of any means making it possible to supply heat from outside the pipes.

9. Process according to Claim 8, characterised in that the means for bringing the strip of material to the fused state are selected from the group formed by induction units, infrared appliances and heating collars.

10. Process according to Claim 5, characterised in that the clamping blades are in the form of an arc of a circle, of which the radius of curvature of the outer face is equal to the inner radius of curvature of the covered pipes and the length of which is equal to the quotient of the inner circumference of the covered tubes and the number of clamping blades.

11. Process according to Claim 10, characterised in that the end edges of the clamping blades are machine-bevelled in such a way that the end edges of two consecutive clamping blades overlap closely when the clamping blades are in an opening position which is such that their outer face forms a continuous cylindrical surface of revolution of a diameter equal to the inside diameter of the covered tubes.

12. Process according to claim 5, characterised in that the width of the clamping blades is between 2 and 4 times the width of the part still uncovered after joining, as measured in the direction of the generatrices of the pipes.

FIG. 1

FIG. 2

FIG.3

FIG.4

## FIG. 5

## FIG. 6

<u>FIG.7</u>

<u>FIG.8</u>

FIG. 9

FIG. 10